Europäisches Patentamt

European Patent Office

Office européen des brevets

(19)

(11) Veröffentlichungsnummer: **0 278 533**
**B1**

(12) **EUROPÄISCHE PATENTSCHRIFT**

(45) Veröffentlichungstag der Patentschrift: **06.02.91**

(51) Int. Cl.⁵: **F 16 H 55/08**

(21) Anmeldenummer: **88104586.8**

(22) Anmeldetag: **06.08.85**

(60) Veröffentlichungsnummer der früheren Anmeldung nach Art. 76 EPÜ: **0 178 410**

(54) **Paarung zweier koaxial angeordneter Getriebeteile mit je einer Schaltverzahnung.**

(30) Priorität: **20.09.84 DE 3434558**

(43) Veröffentlichungstag der Anmeldung:
**17.08.88 Patentblatt 88/33**

(45) Bekanntmachung des Hinweises auf die Patenterteilung:
**06.02.91 Patentblatt 91/06**

(84) Benannte Vertragsstaaten:
**DE FR GB IT**

(56) Entgegenhaltungen:
**WO-A-84/02964**
**DE-B-1 047 578**
**FR-A-2 072 854**
**FR-E- 23 070**

(73) Patentinhaber: **Carl Hurth Maschinen- und Zahnradfabrik GmbH & Co**
**Moosacher Strasse 36**
**D-8000 München 40 (DE)**

(72) Erfinder: **Spensberger, Johann**
**Watzmannstrasse 9**
**D-8011 Poing (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung betrifft eine Paarung zweier koaxial angeordneter Getriebeteile mit je einer Schaltverzahnung gemäß dem Oberbegriff des Patentanspruchs.

Zahnräder und ähnliche Getriebeteile der genannten Art werden bei fast allen Schaltgetrieben verwendet, wo ein axial verschiebbares Kupplungsteil in ein nicht verschiebbares Teil geschoben wird und so durch Formschluß eine Kraftübertragung von einer Welle auf das Zahnrad oder umgekehrt ermöglicht. Meistens wird dabei eine auf der Welle drehfest, aber verschiebbar angeordnete Schaltmuffe mit einem Zahnrad oder — bei Synchrongetrieben — mit einem Kupplungskörper verbunden. Dabei weist eines der Teile eine Außen-, das andere Teile eine entsprechende Innenverzahnung auf. Zum leichteren Ineinanderführen der beiden Verzahnungen, wenn sich die Zähne des einen Teils nicht genau gegenüber den Zahnlücken des anderen Teils befinden, sind die einander zugewendeten Stirnseiten der Zähne abgerundet oder abgedacht. Für diese so gebildeten Schalterleichterungen sind verschiedene Formen bekannt ("Werkstatt und Betrieb", 95. Jahrgang (1962), Heft 3, S. 139 bis 143).

Die von den beiden Dachflächen gebildete Kante, der sog. Dachfirst (oder kurz: First), nimmt beim Härten verfahrensbedingt die größte Härte an und neigt zum Ausbrechen, was an jedem über einige Zeit im Einsatz gewesenen Getriebe zu sehen ist. Die ausgebrochenen Teilchen verbleiben zunächst im Getriebeöl, wo sie sich an einem Magnet absetzen und beim Ölwechsel entfernt werden können. Bei stirnseitig vollkommen gerundeten Schaltverzahnungen ist ein Ausbrechen nur sehr selten zu beobachten, sie lassen sich aber erheblich schlechter schalter, da bei ihnen beim Ineinanderführen nur stumpfe Winkel aufeinander treffen.

Ein Ausbrechen des Dachfirst kann weitgehend vermieden werden, wenn der Dachfirst mit einer Rundung versehen ist, wie das von der WO—A—84/02964 bekannt ist. Von diesem Stand der Technik geht die Erfindung aus.

Alle dachförmigen Schalterleichterungen haben eine Gemeinsamkeit, nämlich daß die Berührung der gegenüberliegenden Dachflächen beim Schaltvorgang nur punktweise erfolgt, was eine hohe Flächenpressung mit Mischreibung und entsprechenden Verschließ bewirkt und einen relativ großen Kraftaufwand beim Schalten erfordert.

Der Erfindung liegt deshalb die Aufgabe zugrund, eine Schalterleichterung der genannten Art so zu gestalten, daß keine Punktberührung beim Ineinanderführen von koaxialen Schaltverzahnungen mehr entsteht. Außerdem soll ein Ausbrechen des Dachfirstes verhindert werden.

Erfindungsgemäß wird die Aufgabe gelöst mit derart gestalteten Schalterleichterungen an den beiden miteinander in Eingriff bringbaren Schaltverzahnungen, daß jede Dachfläche zumindest annähernd ein Ausschnitt aus einer z-gängigen Schraube ist, wobei z die Zähnezahl der Außen- bzw. Innenverzahnung ist.

Eine Dachform, deren Dachflächen (Dachformhälften) dem Ausschnitt aus einer mehrgängigen Schraube mit einem Spiralwinkel entsprechend dem Dachformwinkel entsprechen, kann als optimal angesehen werden. Wegen der koaxialen Anordnung der ineinanderzuschiebenden Teile bei gleichzeitiger Drehung relativ zueinander bietet die schraubenförmige Ausbildung der Schalterleichterung ein einwandfreies Gleiten der beiden Teile gegeneinander ohne Verlagerung des Berührpunktes bzw. der Berührlinie. Wenn eine solche Schalterleichterung in Form eines Ausshnittes aus einer Schraube nach dem in der EP—0 178 410 A1 beschriebenen Verfahren hergestellt wird, kommt als weiterer Vorteil hinzu, daß die Bearbeitungsriefen in der Richtung der Schaltbewegung verlaufen und nicht, wie beim Fräsen, quer dazu.

In der FR—A—2 072 854 ist eine Anordnung von Zahnrädern beschrieben, die auf zueinander parallelen Achsen angeordnet sind und durch Axialverschiebung miteinander in Eingriff gebracht werden, wobei bei dieser bekannten Ausführung die dachförmigen Zahnenden so gestaltet sind, daß die gegenseitige Berührung eine Linienberührung ist. Somit unterscheidet sich diese Ausführung von der erfindungsgemäßen Ausführung in drei wesentlichen Punkten:

1) Es sind Zahnräder auf zwei parallelen Achsen vorgesehen, währen bei der Erfindung koaxial angeordnete Getriebeteile vorhanden sind.

2) Beim Einkuppeln der beiden bekannten Zahnräder wirkt jeweils ein Ausschnitt aus einer rechtsgängigen Schraube gegen einen Ausschnitt aus einer linksgängigen Schraube. Bei der Erfindung dagegen wirkt jeweils ein Ausschnitt aus einer rechtsgängigen Schraube mit einem rechtstängigen Gegenstück oder ein Ausschnitt aus einer linksgängigen Schraube mit einem linksgängigen Gegenstück zusammen.

3) Auf Grund der geometrischen Gegebenheiten findet bei der bekannten Ausführung eine Linienberührung statt zwischen evolventenförmigen, kreisbogenförmigen oder zykloidalen Flächen, wohingegen bei der erfindungsgemäßen Ausführung ein Aufeinandergleiten von Schraubenflächen, also eine flächenartige Berührung, stattfindet.

Diese flächenartige Berührung ist eine echte Umhüllung der beiden beteiligten Flächen, die durch den Stand der Technik nicht vorweggenommen und auch nicht nahegelegt wird.

Die Erfindung wird nachstehend anhand eines Ausführungsbeispieles beschrieben, das in 2 Figuren dargestellt ist. Es zeigen

Fig. 1 einen Teil eines Zahnes mit der erfindungsgemäßen Dachform in einer Abwicklung eines Zahnrades mit den Bewegungen eines Werkzeugs, und

Fig. 2 einen abgedachten Zahn mit gerundeter Dachfirst in einer Draufsicht.

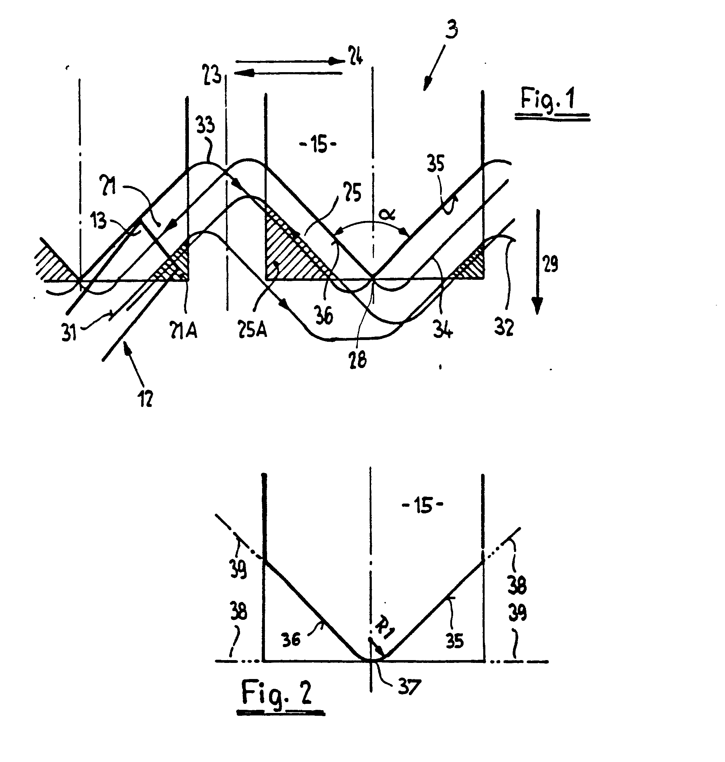

Ein nur ausschnittsweise und vereinfacht dargestellter Zahn 15 eins außenverzahnten Zahnrades 3 weist an einer Stirnseite eine dachförmige Schalterleichterung mit zwei Dachformhälften oder Dachflächen 35, 36 auf, die an ihrer gemeinsamen, senkrecht zur Zeichenebene der Figur 1 verlaufenden Kante einen Dachfirst (kurz: First) 28 bilden. Dabie schließen die beiden Dachflächen 35, 36 einen Dachwinkel α ein. Wenn der First 28 zur Stirnfläche des Zahnrades 3 geneigt ist, dann variiert der Dachwinkel α über die Zahnhöhe zwischen einem Kleinstwert am Zahnfuß und einem Größwert am Zahnkopf.

Jede Dachfläche 35, 36 ist ein Ausschnitt aus einer Schraubenfläche, und zfwar einer z-gängigen Schraube, wobei z die Zähnezahl des Zahnrades 3 ist. Die Achse der z-gängigen Schraube ist dabei identisch mit der Rotations- oder Längsachse des Zahnrades 3. Sollen die Zähne 15 des Zahnrades 3 it entsprechenden Zähnen eines nicht dargestellten innenverzahnten Gegenzahnrades in Eingriff gebracht werden, und wird das Zahnrad 3 dazu in Pfeilrichtung 29 (Schaltrichtung) bewegt, dann treffen in der Regel jeweils zfwei Dachflächen aufeinander. Um den gewünschten Zahneingriff zu erreichen, erfolgt ein relatives Verdrehen zwischen Zahnrad 3 und Gegenzahnrad in Pfeilrichtung 23, 24, bei dem die beiden Dachflächen aufeinander gleiten.

Die Dachflächen 35, 36 können mit einer Schneide 13 eines nicht näher gezeigten Stoßstahles (Werkzeug 12) erzeugt werden, der von einer ebenfalls nicht gezeigten Nockenscheibe gesteuert, eine Hubbewegung zum zu bearbeitenden Zahn 15 hin und wieder zurück ausführt und zwar auf einer kreisabschnittförmigen Bahn, wobei bei der Hinbewegung eine Spanabnahme erfolgt. Das Werkstück 3 rotiert dabei ständig. Seine Drehbewegung und die Hubbewegung sind so aufeinander abgestimmt, daß das Werkzeug 12 während einer Werkstückumdrehung ebenso viele Hübe ausführt wie das Werkstück Zähne hat. Dadurch werden alle Zähne während einer Umdrehung bearbeitet.

Ein Bearbeitungsbeispiel ist in Fig. 1 gezeigt. Die Schneide 13 ist so angeordnet, daß sie parallel zur Stirnseite des Werkstücks 3 und zu einer Radialen, die von der Werkstückachse ausgehend mittig durch den zu bearbeitenden Zahn 15 verläuft, liegt. Sie bewegt sich zunächst auf einer Kurve 31. Das Werkstück dreht sich dabei in Pfeilrichtung 23. Die zu entfernenden Kanten 21 werden teilweise abgetragen (schraffierte Flächen 21A). Dann wird die Drehrichtung gewechselt (Pfeilrichtung 24) und die Schneide 13 bewegt sich auf einer Kurve 32) dabei werden die anderen zu entfernenden Kanten 25 teilweise abgetragen (schraffierte Fläche 25A). Anschließend wird die Drehrichtung wieder gewechselt, die Schneide bewegt sich jetzt auf einer Kurve 33 und stellt die Dachfläche 35 fertig. Schließlich wird die Drehrichtung noch einmal gewechselt, verläuft also wieder in Pfeilrichtung 24, und die jetzt einer Kurve 34 folgende Schneide stellt die Dachfläche 36 fertig. Die in den Kurven 31 bis 34 eingezeichneten Pfeilspitzen geben die Relativbewegung der Shneide 13 gegenüber dem Werkstück 3 an.

Bei dem Beispiel nach Figur 1 wird die Schneide 13 beim Rückhub jeweils von der Verzahnung abgehoben. Sie kann aber auch nur bis zur Stirnfläche des Werkstücks 3 zurückgezogen werden. Dann können mit entsprechend geformten Nokkenscheiben die Zähne 15 einen gerundeten Dachfirst 37 erhalten (Figur 2). Wenn bei der Schaltbewegung 29 nicht die Dachflächen aufeinander treffen, sondern die Friste des Zahnrades 3 und des Gegenzahnrades, dann ist mit der Randung R1 die Gefahr des Ausbrechens der Firste wesentlich geringer als bei spitzen Firsten 28. Die Rundung R1 des Dachfirstes 37 kann in zwei Arbeitsgängen bei jeweils entgegengesetzter Drehrichtung fertiggestellt werden: Bei der Drehung des Werktücks in Pfeilrichtung 23 folgt die Schneide der Kurve 38 und bei der entgegengesetzten Drehung der Kurve 39. Die Kurven 38 und 39 kreuzen sich jeweils in der Zahnmitte, d.h. im Scheitel der Rundung R.1

**Patentanspruch**

Paarung zweier koaxial angeordneter Getriebeteile mit je einer Schaltverzahnung, von denen die eine eine Außenverzahnung und die andere eine entsprechende Innenverzahnung ist und die durch axiales Verschieben eines der beiden Getriebeteile miteinander in Eingriff bringbar sind, wozu die Zähne an den einander zugewendeten Stirnseiten eine dachförmige Schalterleichterung aufweisen, deren Dachfirst gerundet sein kann, dadurch gekennzeichnet, daß jede Dachfläche (35, 36) zumindest annähernd ein Ausschnitt aus einer z-gängigen Schraube ist, wobei z die Zähnezahl der Außen-bzw. Innenverzahnung ist.

**Revendication**

Appariement de deux parties de transmission disposées coaxialement et comportant chacune une denture de couplage, dont l'une est une denture extrene, tandis que l'autre est une denture interne correspondant, et ces dentures étant susceptible d'être amenées mutuellement en prise par déplacement axial de l'une des deux parties de transmission, les dents comportant, à cet effet, sur les faces frontales en regard 'une de l'autre des deux parties de transmission, l'une forme en toit faciilitant le coulage, l'arête de ce toit pouvant être arrondie, appariement caractérisé en ce que chaque surface de toit (35, 36) est au moins approximativement une partie d'une vis à z filets, z étant le nombre de dent de la denture externe ou de la denture interne.

**Claim**

Pairing of two coaxially arranged transmission parts each having a gear-shift toothing, one of which is an outer toothing and the other a corresponding inner toothing and which can be thrown into gear by the axial displacement of one of the two transmission parts, for which purpose the teeth have, on the ends facing each other, a roof-shaped gear-shift facilitating device, the ridge of which can be rounded, characterised in that each bevelled surface (35, 36) is at least approximately a segment of a z-thread screw, where z is the number of teeth on the outer or inner toothing.

Fig. 1

Fig. 2